# EUROPÄISCHE PATENTSCHRIFT

(11) **EP 1 954 510 B1**
(45) Veröffentlichungstag und Bekanntmachung des Hinweises auf die Patenterteilung: **28.07.2010**
(21) Anmeldenummer: 06846933.7
(22) Anmeldetag: 29.11.2006
(51) Int. Cl.: B60B 33/00, B60C 19/08

(54) **TRANSPORTROLLE FÜR EINEN TRANSPORTWAGEN**
TRANSPORT ROLLER FOR A TRANSFER CAR
GALET DE ROULEMENT POUR UN CHARIOT DE TRANSPORT

(30) Priorität: 01.12.2005 DE 202005018857 U
(43) Veröffentlichungstag der Anmeldung: 13.08.2008
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(86) Internationale Anmeldenummer: PCT/DE2006/002115
(87) Internationale Veröffentlichungsnummer: WO 2007/062631

(56) Entgegenhaltungen:
- WO-A-94/17694
- GB-A- 824 662
- US-A- 4 709 444

## Beschreibung

### Technisches Gebiet

Die Erfindung betrifft eine Transportrolle für einen Transportwagen.

### Stand der Technik :

Eine Transportrolle nach dem Oberbegriff des Anspruchs 1 ist aus der US 4 709 444 bekannt.

Bei bekannten Transportrollen kann es abhängig vom Material der Fahrbahn und der Rolle bedingt durch das Rollen auf der Fahrbahn zu einer elektrostatischen Aufladung der Rolle kommen.

Dies hat nachteilig zur Folge, dass sich die elektrostatische Aufladung der Rolle auf den Transportwagen überträgt.

Je länger die Fahrstrecke der Rolle auf der Fahrbahn ist, desto höher wird die Aufladung des Transportwagens.

Nachteilig ist hierbei, dass eine Person, welche ein leitendes Teil am Transportwagen berührt einen unangenehmen Stromschlag versetzt bekommt.

Aus dem in der DE 3 626954 C1 offenbartem Stand der Technik ist es bekannt, dem Material für die Laufrolle eine elektrisch leitende Komponenten beizufügen. Nachteilig bei dieser Lösung ist der notwendige Einsatz von speziellem Material für die Rollen einhergehend mit erhöhten Kosten bei der Herstellung und auch nachteilig ist es, dass ein Nachrüsten bestehender Transportrollen nur durch den aufwendigen den Austausch der gesamten Laufrolle erfolgen kann.

Aus der DE 3913720 C2 ist eine Vorrichtung bekannt, die an elektrisch leitenden Teilen des Transportwagens gelagert ist und mit der Laufrolle elektrisch über einen Schleifkontakt in Verbindung steht. Nachteilig bei dieser Lösung ist die Anfälligkeit gegen Verschmutzungen, die zwischen Kontakt und Laufrolle geraten können. Die Lösung ist auch nicht geeignet für eine Nachrüstung der Transportrollen, da ein hoher Aufwand nötig ist, um das Lager für den Schleifkontakt am Transportwagen zu schaffen.

### Offenbarung der Erfindung

### Technische Aufgabe

Es ist Aufgabe der Erfindung, eine Transportrolle zu schaffen, bei welcher die elektrostatische Aufladung verhindert wird oder soweit verringert wird, dass keine unangenehmen Stromschläge stattfinden, wobei diese Vorrichtung unempfindlich gegen Verschmutzungen ist, geringen Aufwand bei der Herstellung erfordert und das Nachrüsten bestehender Transportrollen leicht möglich ist.

### Technische Lösung

Bei den bekannten Transportrollen wird die Aufladung der Laufrolle dadurch verhindert, dass man die Laufrolle insgesamt elektrisch leitend gestaltet oder an der Oberfläche der Laufrolle ein elektrisch leitendes Material in schleifenden Kontakt bringt.

Bei einer Transportrolle, bestehend aus einer Laufrolle aus Kunststoff welche auf einer Welle gelagert ist, wobei die Welle wiederum über eine Gabel mit dem Transportwagen verbunden ist, hat es sich im Zuge einer erfolgreichen Lösung der Aufgabe herausgestellt, dass ein Isolator, der im Bereich zwischen dem Rad und der Gabel gemäß Anspruch 1 angeordnet ist, eine Aufladung des Transportwagens stark bis vollständig verhindert.

### Vorteilhafte Wirkungen

Durch die beschriebene Maßnahme wird vorteilhaft verhindert, dass sich eine elektrostatische Aufladung vom Rad auf den Einkaufswagen überträgt.

Dies hat vorteilhaft zur Folge, dass eine Person, welche ein leitendes Teil am Transportwagen berührt nun keinen unangenehmen Stromschlag versetzt bekommt.

### Kurze Beschreibung der Zeichnungen

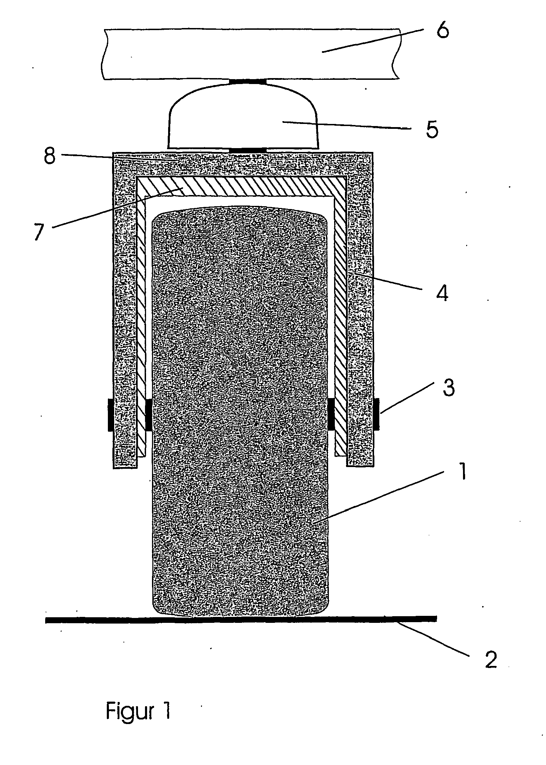

Die Figur 1 zeigt von vorne betrachtet eine Rolle 1, welche auf einer Fahrbahn 2 rollt. Über eine Welle 3 ist die Rolle 1 an einer Gabel 4 befestigt.

Die Gabel 4 ist über eine Lenkachse 5 am Rahmen 6 eines Einkaufswagens lenkbar befestigt.

Ebenso kann es sich bei der Rolle auch um eine nicht lenkbare Rolle handeln, bei welcher die Gabel starr mit dem Rahmen des Einkaufswagens verbunden ist.

Der Einkaufswagen ist aus Gründen der Übersichtlichkeit nicht vollständig dargestellt. Das gezeigte Teil 6 steht repräsentativ für den Einkaufswagen.

Die Innenseite der Gabel 4 ist mit einem Isolator 7 ausgekleidet.

Der Isolator 7 verkleidet auch die Teile der Lenkachse 5, welche in die Gabel 4 ragen.

Es ist in manchen Fällen auch ausreichend, wenn nur die Teile der Lenkachse 5, die in die Gabel reichen von einem Isolator bedeckt sind.

In anderen Fällen ist es Ausreichend, wenn der parallel zur Welle 3 verlaufende dem Rad 1 zugewandte Bereich 8 der Gabel 4 mit einer isolierenden Auflage oder Ummantelung versehen ist.

Dieser Isolator verhindert den Übergang der elektrostatischen Ladung von der Rolle auf andere Teile.

Alternativ zu dem dargestellten Beispiel ist es auch möglich, die gesamte Gabel 4 mit einem Isolator zu ummanteln, zu beschichten oder zu lackieren.

Eine vorteilhafte Möglichkeit für die Ummantelung sieht vor, die Gabel 4 mit einem Gummiüberzug zu versehen. Eine solche Gummiummantelung kann beispielsweise in einem Tauchbad aufgetragen werden und ist aufgrund der dabei verbleibenden relativ dicken Materialstärke ein vorteilhaftes Verfahren.

Durch das Anbringen des Isolators 7 oder durch das oben beschriebene Lackieren, Beschichtung bzw. Ummanteln wird vorteilhaft verhindert, dass sich elektrische Ladung, die an der Rolle 1 entsteht auf den Einkaufswagen übertragen wird.

### Gewerbliche Anwendbarkeit

Die Erfindung ist gewerblich anwendbar bei jeglicher Art von Rollen für den Anwendungsbereich der Transportwagen

## Patentansprüche

1. Transportrolle für Transportwagen, wobei die Rolle über eine Welle mit einer Haltegabel verbunden ist und die Haltegabel mittels Befestigungselementen am Gestell des Transportwagens fest oder lenkbar angebracht ist, wobei
Teile der Haltegabel (4) und / oder der Befestigungselemente (5) mit einer elektrisch isolierenden Auflage und / oder Ummantelung versehen sind, **dadurch gekennzeichnet, dass** zumindest der parallel zur Welle (3) verlaufende dem Rad (1) zugewandte Bereich (8) der Haltegabel (4) mit einer elektrisch isolierenden Auflage und / oder Ummantelung (7) versehen ist.

2. Transportrolle nach Anspruch 1
**dadurch gekennzeichnet, dass**
alle Teile der Haltegabel (4) mit einer elektrisch isolierenden Auflage und / oder Ummantelung (7) versehen sind.

3. Transportrolle nach Anspruch 1
**dadurch gekennzeichnet, dass**
zumindest die der Rolle (1) zugewandten Bereiche der Haltegabel (4) mit einer elektrisch isolierenden Auflage und / oder Ummantelung (7) versehen sind.

4. Transportrolle nach einem der Ansprüche 1 bis 3
**dadurch gekennzeichnet, dass**
die isolierende Auflage ein zusätzliches, nachrüstbares Teil ist 5. Transportrolle nach einem der Ansprüche 1 bis 4
**dadurch gekennzeichnet, dass**
die isolierende Ummantelung durch Lackieren, Beschichten oder durch ein Tauchbad auf der Haltegabel (4) anbringbar ist.

## Claims

1. Transport roller for transfer cars, with the roller being connected to a retaining fork by means of a shaft, and the retaining fork being fixedly or steerably fitted to the frame of the transfer car by means of attachment elements, with parts of the retaining fork (4) and/or of the attachment elements (5) being provided with an electrically insulating coating and/or sheathing **characterized in that** at least that region (8) of the retaining fork (4) which runs parallel to the shaft (3) and faces the wheel (1) is provided with an electrically insulating coating and/or sheathing (7).

2. Transport roller according to Claim 1, **characterized in that** all parts of the retaining fork (4) are provided with an electrically insulating coating and/or sheathing (7).

3. Transport roller according to Claim 1, **characterized in that** at least those regions of the retaining fork (4) which face the roller (1) are provided with an electrically insulating coating and/or sheathing (7).

4. Transport roller according to one of Claims 1 to 3, **characterised in that** the insulating coating is an additional part which can be retrofitted.

5. Transport roller according to one of Claims 1 to 4, **characterized in that** the insulating sheathing can be applied to the retaining fork (4) by painting, coating or using an immersion bath.

## Revendications

1. Rouleau de transport pour chariots de transport, dans lequel le rouleau est relié à une fourche de maintien par le biais d'un arbre, et la fourche de maintien est montée de manière fixe ou dirigeable sur le châssis du chariot de transport au moyen d'éléments de fixation, dans lequel des parties de la fourche de maintien (4) et/ou des éléments de fixation (5) sont pourvues d'un appui et/ou d'une enveloppe électriquement isolant(e),
**caractérisé en ce que**
au moins la région (8) de la fourche de maintien (4) qui est tournée vers la roue (1) et s'étend parallèlement à l'arbre (3) est pourvue d'un appui et/ou d'une enveloppe (7) électriquement isolant(e).

2. Rouleau de transport selon la revendication 1,
**caractérisé en ce que**
toutes les parties de la fourche de maintien (4) sont pourvues d'un appui et/ou d'une enveloppe (7) électriquement isolant(e).

3. Rouleau de transport selon la revendication 1,
**caractérisé en ce que**
au moins la légion de la fourche de maintien (4) qui est tournée vers le rouleau (1) est pourvue d'un appui et/ou d'une enveloppe (7) électriquement isolant(e).

4. Rouleau de transport selon l'une des revendications 1 à 3,
**caractérisé en ce que**
l'appui isolant est une pièce supplémentaire apte à être montée ultérieurement.

5. Rouleau de transport selon l'une des revendications 1 à 4,
**caractérisé en ce que**
l'enveloppe isolante peut être réalisée sur la fourche de maintien (4) par laquage, revêtement ou immersion.
